Europäisches Patentamt

**European Patent Office**

**Office européen des brevets**

(19)

(11) Numéro de publication : **0 107 117**
**B1**

(12) # FASCICULE DE BREVET EUROPÉEN

(45) Date de publication du fascicule du brevet :
**27.05.87**

(51) Int. Cl.⁴ : **F 41 F 19/14**

(21) Numéro de dépôt : **83109899.1**

(22) Date de dépôt : **04.10.83**

(54) **Frein de recul hydropneumatique à récupération d'énergie pour pièces d'artillerie et armes à feu.**

(30) Priorité : **14.10.82 FR 8217233**

(43) Date de publication de la demande :
**02.05.84 Bulletin 84/18**

(45) Mention de la délivrance du brevet :
**27.05.87 Bulletin 87/22**

(84) Etats contractants désignés :
**AT BE CH DE FR GB IT LI NL SE**

(56) Documents cités :
**FR-A- 2 074 243**

(73) Titulaire : **Brandt, François**
**Chalet le Caribou**
**CH-1884 Villars-sur-Ollon (Vaud) (CH)**

(72) Inventeur : **Brandt, François**
**Chalet le Caribou**
**CH-1884 Villars-sur-Ollon (Vaud) (CH)**

(74) Mandataire : **Casalonga, Axel et al**
**BUREAU D.A. CASALONGA OFFICE JOSSE & PETIT**
**Morassistrasse 8**
**D-8000 München 5 (DE)**

## Description

La présente invention a pour objet un frein de recul hydropneumatique à récupération partielle d'énergie du type comportant une tige creuse liée à la masse reculante d'une pièce d'artillerie ou d'une arme individuelle et coulissant à l'intérieur d'un corps tubulaire cylindrique lié au bâti fixe de la pièce ou de l'arme.

On sait qu'il est nécessaire, sur certaines armes à feu individuelles, de prévoir des freins de recul capables de maintenir la réaction de l'arme sur l'épaule du tireur dans des limites raisonnables. On utilise également des freins de recul sur des pièces d'artillerie ou sur les mortiers montés sur véhicule. La poussée d'un tel mortier de calibre moyen lors du départ du coup pouvant être de l'ordre de 40 tonnes, on comprend qu'il devient nécessaire, pour monter un mortier sur la plate-forme d'un véhicule, de prévoir des moyens capables de réduire cette poussée de 10 à 20 fois environ.

On connaît déjà des freins de recul du type hydropneumatique dans lesquels le mouvement de recul du tube-canon de la pièce ou de l'arme provoque un déplacement de liquide hydraulique qui comprime un gaz dont l'élévation de pression permet ultérieurement le retour en batterie, réalisant ainsi une récupération au moins partielle de l'énergie de recul.

On connaît également des freins de recul hydropneumatique comprenant un corps tubulaire cylindrique creux fixé rigidement au bâti de la pièce ou de l'arme et à l'intérieur duquel coulisse de façon étanche une tige creuse liée à la masse reculante de la pièce ou de l'arme. L'espace annulaire compris entre le corps et la tige est rempli d'un liquide hydraulique et communique avec une première chambre définie à l'intérieur de la tige creuse par un piston mobile de récupération d'énergie qui définit par ailleurs une deuxième chambre remplie d'un gaz. Un clapet anti-retour ou une soupape soumis à l'action d'un petit ressort est monté à l'intérieur de la tige creuse de façon à pouvoir obturer le passage normal à la fin de la course de recul, le gaz comprimé agissant alors sur le piston mobile afin de provoquer le refoulement de l'huile hors de la tige creuse vers l'espace annulaire au travers d'un orifice calibré. On peut citer à titre d'exemple le brevet français 2 074 243.

Dans les freins de ce type, le clapet anti-retour soumis à l'action d'un ressort de rappel peu puissant a uniquement pour objet d'obturer le passage principal lors du mouvement de retour en batterie. Pendant la course de recul, le clapet est en général complètement ouvert de sorte que la section de passage du liquide hydraulique reste pratiquement constante pendant tout le mouvement de recul. Or, la force de recul due au départ du coup n'est pas constante de sorte qu'il en résulte une réaction sur l'affût de la pièce ou sur l'épaule du tireur qui n'est pas non plus constante. L'amortissement du recul n'étant pas constant, la pression interne due au laminage du liquide hydraulique est très grande en début de course de recul et faible en fin de course. Il est donc nécessaire de réaliser un frein de recul dimensionné pour admettre la plus haute pression interne au début du recul.

De plus, dans les freins de ce type, le clapet ou la soupape est monté de façon à se déplacer dans le même sens que l'écoulement du liquide hydraulique lors de la course de recul. Il en résulte un trajet relativement tortueux pour le liquide hydraulique entraînant une perte de charge importante. En début de course de recul, le laminage de l'huile est en outre très violent, ce qui provoque un échauffement important très localisé.

La présente invention a pour objet la réalisation d'un frein de recul hydropneumatique du type à tige creuse et à récupération d'énergie pour le retour en batterie qui présente un effort de freinage régulier et constant permettant de s'opposer à la force vive de la masse reculante et de l'arrêter sur une course définie.

L'invention a également pour objet de prévoir des moyens permettant de modifier aisément l'effort de freinage et la course de recul.

La présente invention a également pour objet un frein de recul hydropneumatique dans lequel le passage du liquide hydraulique est contrôlé en permanence lors de la course de recul par une soupape régulatrice de débit assurant un effort de freinage constant pendant toute la course de recul, et ce, quelles que soient les éventuelles variations de viscosité du liquide hydraulique en fonction de la température.

De plus la soupape régulatrice de débit assure un écoulement quasi laminaire pour le liquide hydraulique réduisant ainsi la fatigue de l'huile et prolongeant la durée de ses qualités, la configuration et la disposition de la soupape étant telles que le liquide hydraulique exerce un effet de refroidissement sur les différents organes essentiels du frein de recul. Enfin, il est possible d'adjoindre à la soupape régulatrice des moyens permettant d'éviter toute vibration.

Le frein de recul hydropneumatique de l'invention à récupération d'énergie pour pièces d'artillerie et armes à feu, selon l'invention, comprend un corps tubulaire cylindrique lié au bâti fixe de la pièce ou de l'arme et à l'intérieur duquel coulisse de façon étanche une tige creuse liée à la masse reculante de la pièce ou de l'arme. L'espace annulaire compris entre le corps et la tige creuse est rempli d'un liquide hydraulique et communique avec une première chambre définie à l'intérieur de la tige creuse par un piston libre, mobile, de récupération d'énergie qui définit par ailleurs une deuxième chambre remplie d'un gaz, par exemple de l'azote. Une soupape régulatrice de débit est en outre montée mobile à l'intérieur de la tige creuse et sollicitée élastiquement à la fermeture. La soupape coopère avec un siège solidaire de la tige afin de définir un passage de section variable lors du mouvement de recul de la tige à l'intérieur du corps. En outre, selon l'invention le corps de la soupape est situé en amont de l'écoulement du liquide hydraulique par rapport au siège de soupape, la soupape se déplaçant dans le sens inverse dudit écoulement pour ouvrir le passage précité lors du mouvement de recul de la tige creuse.

Avantageusement le corps de la soupape est solidaire d'un piston de commande coulissant dans une portion de tête de l'extrémité avant de la tige creuse. Le corps de la soupape et sa partie active coopérant avec son siège présentent un diamètre inférieur au diamètre interne de la portion de tête précitée de la tige de façon à définir, entre le siège de soupape et le piston de commande, une chambre annulaire présentant dans sa paroi des passages communiquant avec l'espace annulaire compris entre le corps tubulaire du frein et la tige creuse. De cette manière, lors du mouvement de recul de la tige, le liquide hydraulique se trouvant dans l'espace annulaire compris entre le corps tubulaire du frein et la tige, est forcé par les passages précités dans la chambre annulaire définie entre le siège de soupape et le piston de commande de la soupape régulatrice de débit. Compte tenu du diamètre supérieur du piston de commande, la pression exercée dans la chambre annulaire par le liquide hydraulique provoque le déplacement de la soupape dans le sens inverse de l'écoulement du liquide hydraulique qui peut s'échapper entre la partie active de la soupape et son siège en direction de la première chambre définie à l'intérieur de la tige creuse. Le piston mobile se trouve ainsi déplacé par l'augmentation du volume d'huile contenu dans la première chambre provoquant la compression du gaz se trouvant dans la deuxième chambre.

Dans un mode de réalisation préféré de l'invention, la portion de tête de la tige creuse à l'intérieur de laquelle coulisse le piston de commande de la soupape peut être mise sous une pression de gaz par l'intermédiaire d'un obturateur à clapet. Le rappel élastique de la soupape est donc réalisé par la pression du gaz qui peut être adaptée en fonction de l'utilisation prévue entraînant de ce fait une modification de l'effort de freinage et de la vitesse du mouvement de recul.

Dans un mode de réalisation de l'invention adapté plus particulièrement à une arme individuelle ne nécessitant qu'un effort de freinage de relativement faible importance, on pourrait utiliser un ressort de rappel pour la soupape au lieu de la pression d'un gaz.

Pour le mouvement de retour en batterie qui est provoqué par la pression du gaz dans la deuxième chambre agissant sur le piston mobile de récupération d'énergie, on peut prévoir au moins une butée interdisant la fermeture complète de la soupape afin de permettre le retour du liquide vers l'espace annulaire compris entre le corps tubulaire du frein et la tige creuse et limiter la vitesse de retour en batterie. Dans une variante, la soupape est susceptible d'être complètement obturée. La tige creuse comporte alors dans sa paroi au moins un orifice calibré faisant communiquer l'espace annulaire précité avec l'intérieur de la tige creuse pour le retour du liquide hydraulique lors de la course de remise en batterie.

Dans un mode de réalisation de l'invention, la soupape comprend un élément anti-vibration solidaire de son nez et muni de moyens de guidage coopérant avec la tige. L'élément anti-vibration peut comprendre avantageusement un plateau d'un diamètre inférieur à l'alésage de la tige de façon à définir entre le plateau et le nez de la soupape, une chambre anti-vibration communiquant avec la première chambre de la tige par un passage annulaire subsistant entre le plateau et la tige.

Il est possible de prévoir une tige de réglage de course mobile axialement à l'intérieur de l'extrémité avant du corps afin de servir de butée réglable à la partie avant de la tige lors du mouvement de remise en batterie.

On peut également prévoir, à la partie avant de la tige creuse, un dispositif amortisseur de retour en batterie comprenant un corps tubulaire cylindrique rempli de liquide hydraulique solidaire de la tige et à l'intérieur duquel coulisse un élément creux renfermant un piston mobile. Le piston mobile sépare l'élément creux entre une chambre remplie d'un gaz et une chambre remplie de liquide hydraulique communiquant par des orifices avec le corps tubulaire du dispositif amortisseur.

Le frein de l'invention peut également comporter des moyens d'amortissement supplémentaire de sécurité en fin de course de recul.

Le frein de l'invention peut en outre comporter des moyens pour assurer un retour en batterie rapide.

L'invention sera mieux comprise à l'étude de quelques modes de réalisation décrits à titre d'exemples nullement limitatifs et illustrée par les dessins annexés sur lesquels :

les figures 1, 2 et 3 sont des coupes longitudinales partielles d'un premier mode de réalisation d'un frein de recul hydropneumatique selon l'invention ;

la figure 4 est une vue en coupe partielle d'un dispositif amortisseur de retour en batterie pouvant être utilisé dans un frein de recul selon l'invention ;

la figure 5 est une vue en coupe partielle d'une variante de frein hydraulique selon l'invention comportant un dispositif anti-vibration solidaire de la soupape régulatrice de débit ;

la figure 6 est une vue en coupe partielle d'une autre variante comportant une modification de la soupape régulatrice de débit ;

la figure 7 est une vue partielle en coupe d'une variante munie d'un dispositif d'amortissement supplémentaire en fin de course de recul ;

la figure 8 est une vue partielle agrandie de la variante de la fig. 7 ;

la figure 9 est une vue partielle en coupe d'une variante de soupape ; et

la figure 10 est une vue partielle en coupe d'une autre variante de soupape comportant des moyens de passage supplémentaire lors de la remise en batterie.

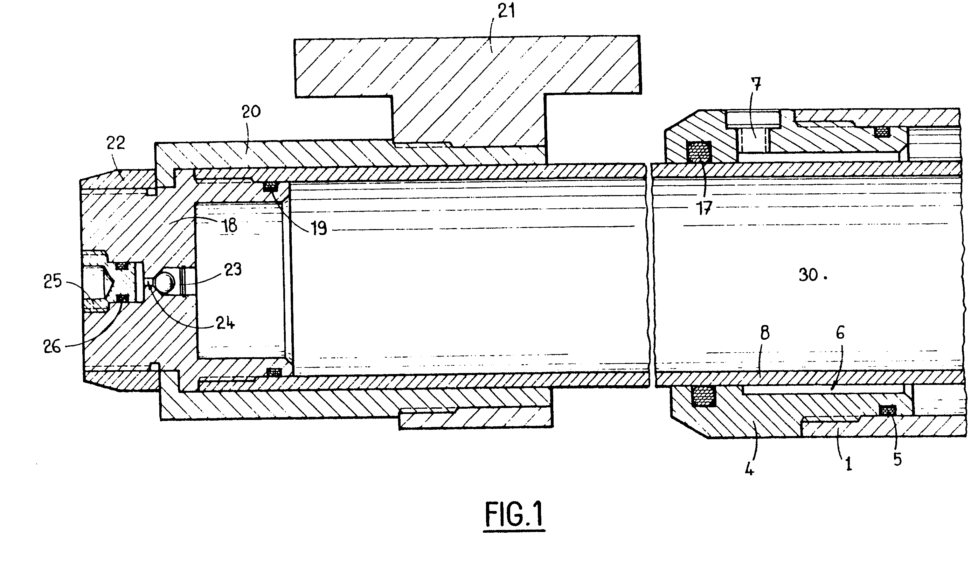

Tel qu'il est illustré aux fig. 1, 2 et 3, le frein de recul de l'invention comporte un corps tubulaire cylindrique 1, destiné à être fixé sur le bâti d'une pièce d'artillerie telle qu'un mortier ou d'une arme à feu individuelle (non illustrée) par exemple à l'aide de colliers appropriés.

L'extrémité avant du corps 1 comporte un obturateur avant 2 présentant une plaque d'extrémité 3. Le corps 1 est muni à son extrémité arrière d'un embout 4 fixé de façon étanche sur la paroi du corps 1, des joints 5 étant prévus à cet effet. Dans la présente description on notera le qualificatif « avant » par rapport à la bouche du canon de l'arme ou de la pièce qui est équipée du frein de recul objet de l'invention.

L'embout 4 comporte une chambre annulaire 6 communiquant avec un orifice de remplissage non illustré. Un orifice de purge 7 est prévu dans l'embout 4.

A l'intérieur du corps 1 coulisse sans jeu et de façon étanche une tige creuse 8 dont l'extrémité avant située à l'intérieur du corps 1 est obturée de façon étanche par une tête interne 9 dont une ceinture comportant des joints 10, 11 forme piston dans le corps 1. Cette tête interne 9 est obturée par un bouchon 13 et elle comporte encore des orifices 14 faisant communiquer une chambre annulaire 15 définie à l'intérieur de la tête 9 avec l'espace annulaire 16 compris entre le corps 1 et la tige creuse 8.

La tige creuse 8 coulisse sans jeu dans l'embout 4 du corps 1 et un joint 17 assure l'étanchéité de l'ensemble. L'extrémité arrière de la tige creuse 8 émergeant hors du corps 1 est obturée de façon étanche par une tête externe 18 vissée sur la tige 8, un joint 19 assurant l'étanchéité. Une douille 20 entourant l'extrémité arrière de la tige 8 et prenant appui contre une partie de la tête 18 permet la fixation de la tige 8 dans un collier 21 solidaire de la masse reculante de la pièce ou de l'arme. Un écrou 22 vissé sur la tête externe 18 fixe rigidement la tige 8 sur la douille 20. La tête externe 18 de la tige creuse renferme un obturateur à clapet de non retour à bille 23 obturant un canal de remplissage 24 de l'espace interne de la tige creuse 8. Un bouchon 25 vissé comportant un joint 26 est encore prévu pour l'obturation permanente, en dehors des opérations de remplissage du canal 24.

Un piston mobile 27 coulisse librement à l'intérieur de la tige creuse 8, des joints 28, 29 assurant l'étanchéité entre ce piston 27 et la tige 8. Le piston 27 sépare la cavité interne de la tige creuse 8 en deux chambres 30 et 31. La première chambre 31, située entre le piston mobile 27 et la tête interne 9, communique avec l'espace annulaire 16 situé entre la tige creuse 8 et le corps 1, par un passage calibré 32 de faible section. On notera que, dans une variante, le passage 32 peut être supprimé.

La tête interne 9 comporte, à son extrémité dirigée vers la première chambre 31 de la tige 8, un siège 33 de profil conique dont la section de plus faible diamètre 35 délimite avec le nez de pointeau 36 de forme conique d'une soupape 37 un orifice de passage entre la chambre 31 et la chambre annulaire 15 de la tête 9. Le nez de pointeau 36 s'étend au-delà du siège 33 jusque dans la chambre 31. La soupape 37 comporte un corps 37a de forme cylindrique et présentant un diamètre externe inférieur au diamètre interne de la tête 9 dans laquelle coulisse la soupape 37. Le corps 37a présente, à son extrémité opposée au pointeau 36, une jupe 38 formant un piston de commande 38a et munie de joints d'étanchéité 39, coulissant librement dans la tête 9. On notera que la jupe 38 du piston de commande et le corps 37a, délimitent, avec le siège 33 et l'alésage de la tête 9, la chambre annulaire 15 qui communique par les passages 14 avec l'espace annulaire 16. A proximité du pointeau 36, la soupape 37 comporte des ergots radiaux 40 servant au guidage de la soupape 37 et entrant en contact avec la face frontale du siège 33 sous l'action élastique agissant sur la soupape, pour définir ainsi une section de passage minimum entre le siège 35 et le pointeau 36. Dans une variante, il est possible de modifier les ergots 40, de façon qu'ils n'entrent plus en contact avec la face frontale du siège 33, la soupape 37 se fermant alors complètement sur son siège 33. Dans ce cas, le passage calibré 32 permet seul le retour du liquide hydraulique.

Le bouchon 13 comporte un obturateur à clapet de non retour à bille 41, obturant un passage de remplissage 42 donnant accès à une chambre formée par un évidement interne 43 de la soupape 37 et la portion terminale 44 de l'évidement de la tête 9 de la tige creuse 8. Après remplissage par un gaz à la pression désirée, notamment de l'azote, de cette chambre 43, 44, un bouchon 45 muni d'un joint 46 est vissé dans le bouchon 13 pour obturer de façon permanente le passage 42. La pression du gaz dans la chambre 43, 44 dépend de la force de freinage désirée. Elle pourra être de l'ordre de 60 bars pour une arme individuelle et de l'ordre de 110 bars pour un mortier de 81 mm. Dans certains cas spécifiques, on pourra remplacer l'action élastique due à la pression du gaz dans la chambre 43 par un élément élastique suffisamment puissant.

La deuxième chambre 30 de la tige creuse 8 est remplie d'un gaz sous pression, tel que de l'azote. La pression de ce gaz est déterminée en fonction de la course de recul, de la masse reculante et de la vitesse de remise en batterie du canon désirées. A titre d'exemples la pression initiale du gaz avant le tir pourra être de l'ordre de 4 bars pour une arme individuelle et de l'ordre de 16 bars pour un mortier de 81 mm.

L'espace annulaire 16 entre le corps 1 et la tige creuse 8 ainsi que la chambre annulaire 15 de la tête interne 9 sont remplis d'un liquide hydraulique, généralement de l'huile.

Dans la forme d'exécution illustrée, le frein de recul est encore équipé d'un dispositif de réglage de la longueur de la course de recul, c'est-à-dire de l'amplitude du déplacement relatif entre la tige creuse 8 et le corps 1. Ce dispositif de réglage est contenu dans un boîtier 47 fixé sur la plaque d'extrémité 3 du corps 1 et comporte une tige de réglage filetée 48 traversant la plaque d'extrémité 3 et dont l'extrémité pénétrant dans le corps 1 est destinée à entrer en contact par une butée 49, avec un amortisseur 50 par exemple en caoutchouc fixé au bouchon 13.

La position axiale de la tige filetée 48 est réglable à l'aide d'un écrou 51 en prise avec la tige filetée 48 et portant sur sa périphérie une denture coopérant avec une vis sans fin 52 tourillonnée dans le boîtier 47 et dont une extrémité munie d'un organe de manœuvre non illustré est accessible de l'extérieur du boîtier. La position axiale de l'écrou 51 est définie par rapport au boîtier 47 par des cales annulaires 53, 54, cette dernière assurant simultanément le centrage de l'écrou 51 sur l'axe de la tige 48. Dans l'exemple illustré, l'extrémité libre de la tige filetée 48, émerge hors du boîtier 47 et est protégée par une coiffe ou chemise 55 fixée sur ce boîtier 47.

Lorsque le frein de recul objet de l'invention est monté sur un mortier, il est alors possible d'abaisser la bouche du canon et de faciliter son chargement par la bouche pour le tir à faibles vitesses initiales.

Le fonctionnement du frein de recul décrit est le suivant :

L'utilisateur règle en fonction de la charge employée, la munition utilisée, la température ambiante, la course totale du frein de recul en ajustant la position relative, correspondant à la position de remise en batterie, de la tige creuse 8 par rapport au corps 1, à l'aide de la vis sans fin 52, de l'écrou 51 et de la tige filetée 48. Le frein de recul est alors dans sa position illustrée aux fig. 1, 2 et 3.

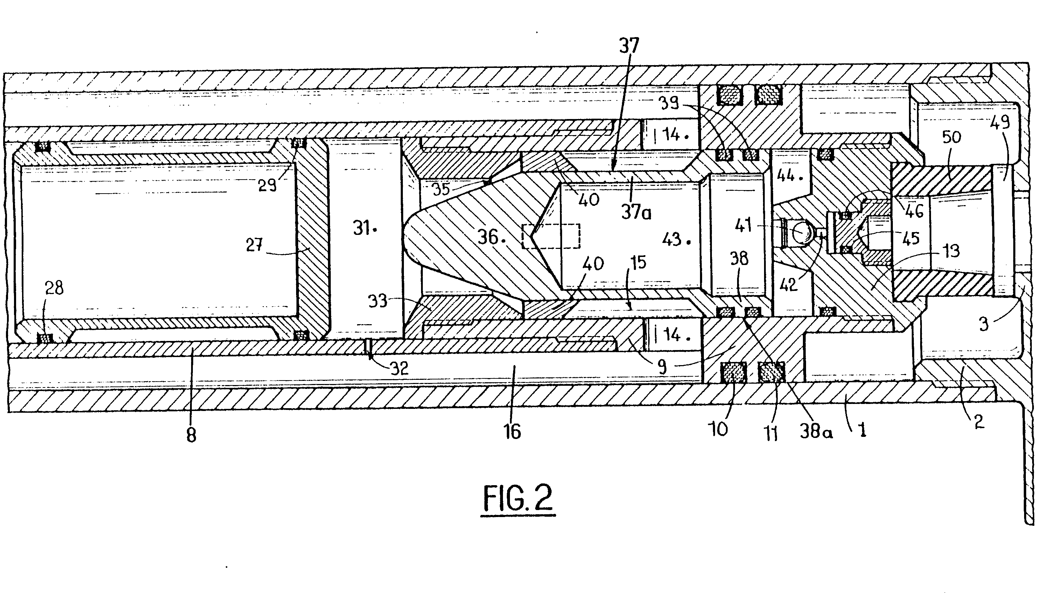

Lors du départ du coup, la force de recul provoque un déplacement relatif entre la tige creuse 8 liée à la masse reculante et le corps 1 lié au bâti fixe, la tige 8 étant déplacée vers l'arrière c'est-à-dire vers la gauche des fig. 1, 2 et 3, en s'extrayant du corps 1. Ce faisant, l'huile contenue dans l'espace annulaire 16 est forcée, par les passages 14 n'entraînant qu'une faible perte de charge compte tenu de leur diamètre important, dans la chambre annulaire 15 où la pression d'huile agit sur le piston de commande formé par la jupe 38 provoquant ainsi le déplacement de la soupape 37 vers l'avant, c'est-à-dire vers la droite de la fig. 2, et ouvrant de manière plus importante le passage entre le pointeau 36 et le siège 33. Ce déplacement qui se fait à l'encontre de la pression sensiblement constante du gaz se trouvant dans la chambre 43 entraîne donc une régulation de débit et de la force de freinage qui se trouve maintenue constante pendant toute la course de recul. On notera que l'écoulement de l'huile dans la chambre annulaire 15 jusqu'à la chambre 31 se fait selon un trajet sensiblement rectiligne dans le sens opposé du déplacement d'ouverture de la soupape 37. De plus, le profil conique du siège 33 et du pointeau 36 dont le nez se prolonge au-delà du siège 33 améliorent encore les conditions de l'écoulement. Enfin, l'écoulement quasi laminaire du liquide hydraulique tout autour du corps 37a de la soupape 37 limite l'échauffement de la portée de la soupape et favorise une dissipation calorifique régulière. L'huile pénétrant dans la chambre 31 de la tige refoule le piston mobile 27 en comprimant le gaz compris dans la deuxième chambre 30 de la tige creuse 8.

La soupape 37 constitue donc un régulateur automatique de la résistance opposée au recul. En effet, plus la force de recul est grande, plus la vitesse de recul augmente, la soupape 37 étant refoulée contre son action élastique de rappel, ici la pression de gaz dans la chambre 43, 44. Ainsi, la section de passage du liquide entre le pointeau 36 et son siège 33 est automatiquement adaptée en fonction de la force de recul pour que la résistance à cette force reste approximativement constante pendant toute la course de recul. La force de résistance au recul étant pratiquement constante, les pressions régnant notamment dans l'espace annulaire 16 et la chambre 31 au cours du recul restent également approximativement constantes. La construction du frein peut être ainsi optimalisée, les surpressions étant supprimées.

Lorsque le tube-canon de la pièce ou de l'arme est immobilisé, toute l'énergie de la masse reculante ayant été absorbée dans le frein de recul, la remise en batterie s'effectue sans brutalité mais avec une force suffisante égale à plusieurs fois le poids de la masse reculante, sous l'effet du gaz comprimé dans la deuxième chambre 30 de la tige 8 qui déplace en outre le piston mobile 27 en direction de la soupape 37. Le retour de l'huile dans l'espace annulaire 16 s'effectue soit par un ou plusieurs orifices calibrés 32, soit par la soupape 37 elle-même lorsque celle-ci comporte des butées 40 interdisant sa fermeture complète.

En fin de course de remise en batterie, la tige creuse 8 entre en contact par son amortisseur 50, avec l'extrémité 49 de la tige filetée 48 et est maintenue dans cette position par la pression de gaz régnant dans la chambre 30 de la tige creuse 8.

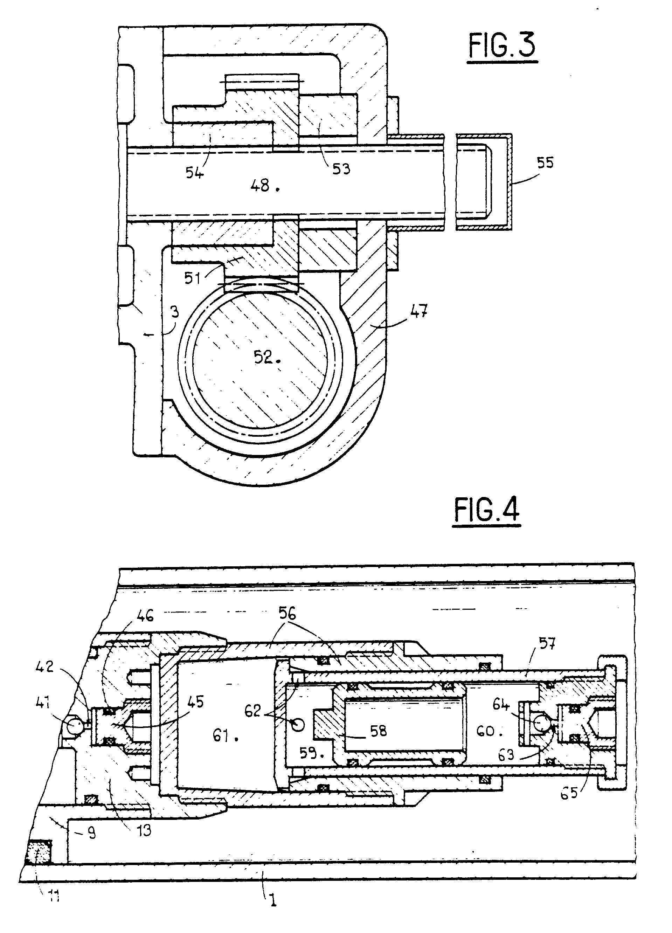

La fig. 4 montre un amortisseur de retour en batterie qui peut être monté à l'extrémité avant de la tige creuse 8. Sur cette figure, les pièces analogues portent les mêmes références.

Le bouchon 13 de la tête interne 9 présente un amortisseur hydropneumatique de recul comportant un corps tubulaire cylindrique 56 vissé sur ledit bouchon 13 dans lequel coulisse de façon étanche un élément creux cylindrique 57, renfermant un piston mobile libre 58 définissant deux chambres 59, 60 dans cet élément creux 57. La chambre 59 communique avec une chambre 61 du corps 56 par des ouvertures 62, tandis que la chambre 60 est fermée et reliée à l'extérieur par un canal de remplissage 63 obturé par un clapet de non retour à bille 64 et un bouchon 65. La chambre 60 est remplie de gaz tel que de l'azote à une pression déterminée tandis que la chambre 61 du corps est remplie d'huile.

Le nez du pointeau 36 de la soupape 37 dirigé vers la chambre 31 de la tige creuse 8 peut présenter toutes formes adéquates, évasées, en forme de bulbe, en forme de plaque, etc... permettant de réduire ou de supprimer tout phénomène de vibration ou de pompage du pointeau pendant le fonctionnement du frein.

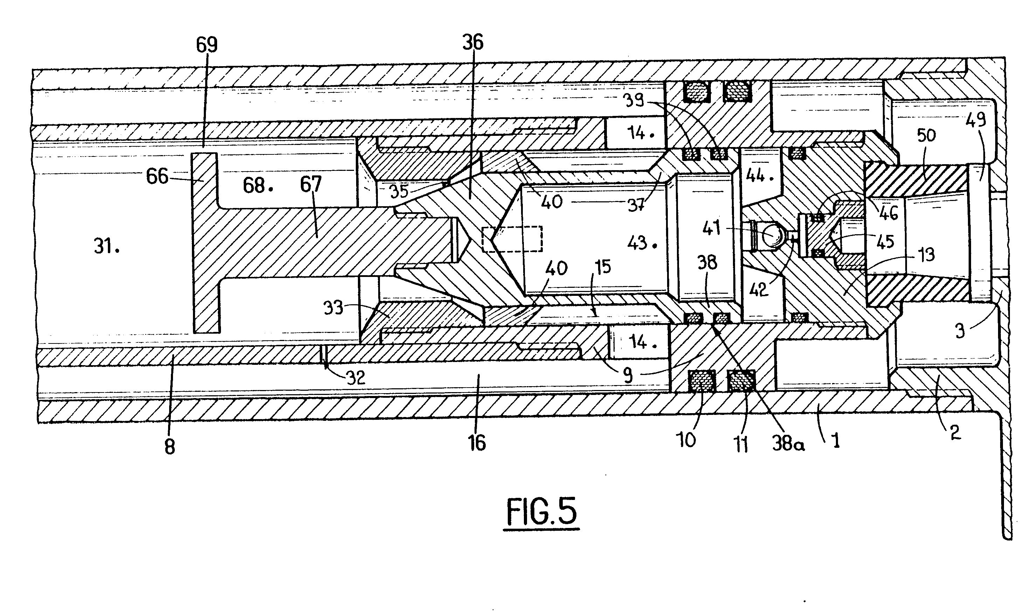

La fig. 5 illustre à cet égard un mode de réalisation d'un dispositif anti-vibration. Sur cette figure, les pièces identiques portent les mêmes références.

Le dispositif anti-vibration comprend un plateau 66 d'un diamètre inférieur à l'alésage de la tige creuse 8. Le plateau est monté à l'extrémité d'un corps cylindrique 67 vissé à l'extrémité du nez de pointeau 36. Une chambre anti-vibration 68 se trouve ainsi définie entre le plateau 66 et le nez de pointeau 36 de la soupape 37, ladite chambre anti-vibration 68 communiquant avec la première chambre 31 par un passage annulaire 69 subsistant entre la périphérie externe du plateau 66 et l'alésage de la tige creuse 8.

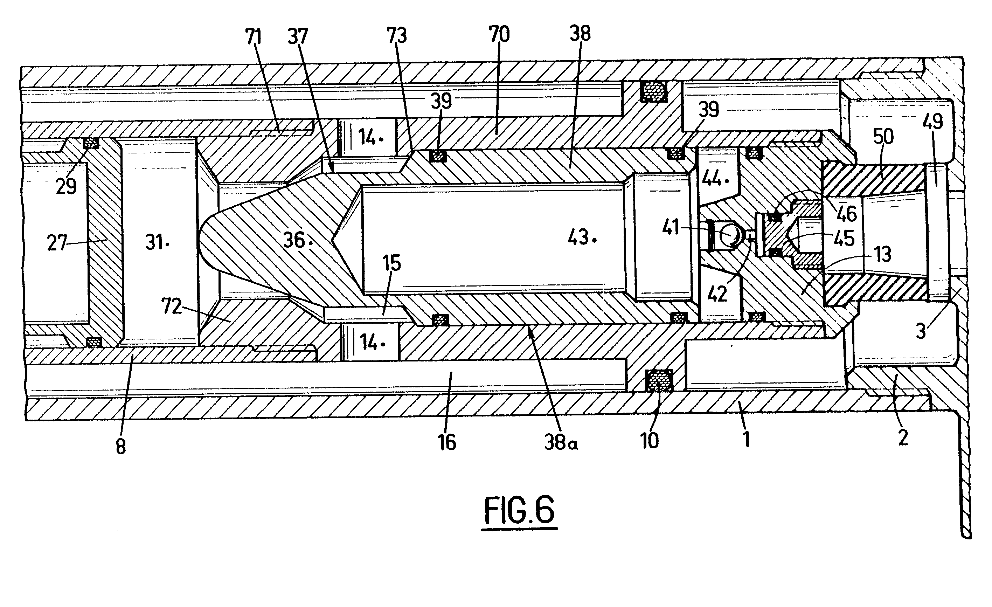

Sur la variante illustrée à la fig. 6 sur laquelle les pièces analogues portent les mêmes références, la structure de la soupape 37 a été légèrement modifiée. Dans cette variante en effet, la jupe 38 formant piston de commande, munie des joints d'étanchéité 39, présente une longueur axiale suffisante, par exemple de l'ordre de 1,6 fois son diamètre externe, pour assurer le guidage de la soupape 37 lors de ses mouvements d'ouverture et de fermeture. Dans ces conditions, les ergots radiaux 40 des autres modes de réalisation ne sont plus nécessaires pour assurer le guidage de la soupape 37.

Par ailleurs, dans ce mode de réalisation, la tête interne 70 fixée à l'extrémité de la tige creuse 8 par le filetage 71 intègre à son extrémité dirigée vers la première chambre 31 de la tige 8, le siège de soupape 72 qui présente un profil identique au siège 33 des modes de réalisation précédent et coopère également avec le nez de pointeau 36 inchangé de la soupape 37. Pour éviter que la soupape 37 se ferme complètement sur son siège 72, la paroi de la tête interne 9 présente un épaulement 73 contre lequel peut venir buter la face frontale de la jupe 38.

On retrouve bien entendu dans ce mode de réalisation la chambre annulaire 15 communiquant par les passages 14 avec l'espace annulaire 16.

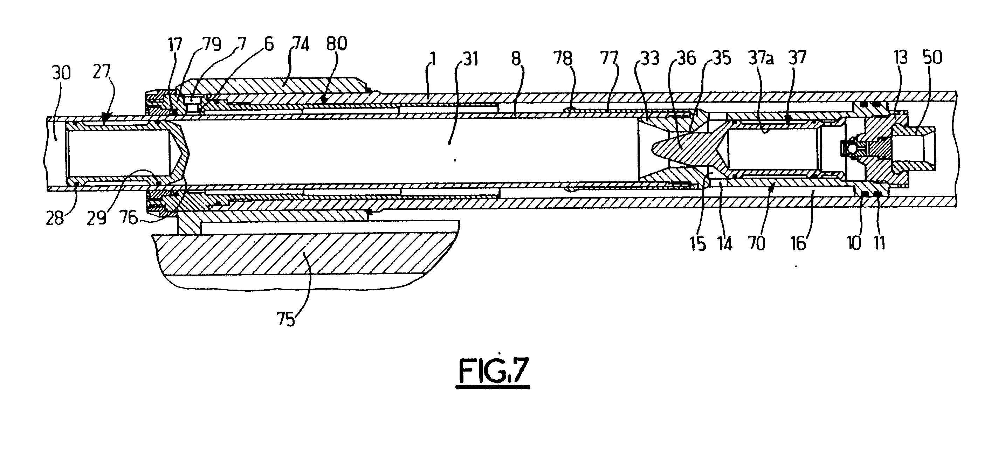

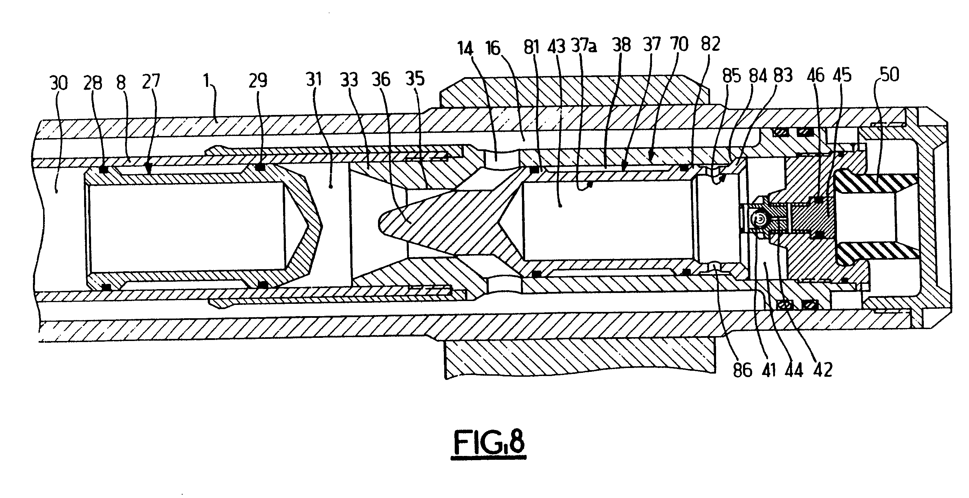

Le mode de réalisation illustré sur les fig. 7 et 8 sur lesquelles les pièces identiques portent les mêmes références se différencie des précédentes variantes essentiellement par la forme du piston mobile 27 et par la structure de la soupape 37.

On retrouve sur la fig. 7 la disposition générale des modes de réalisation précédents, le corps 1 étant cependant solidaire d'un collier intermédiaire supplémentaire 74 à la masse reculante 75.

Dans ce mode de réalisation, la face 76 du piston mobile 27 dirigée vers la soupape 37 est de forme conique convexe au lieu de la forme plane des modes de réalisation précédents. Cela évite tout risque de maintien d'air lors du remplissage du corps 1 et de la tige creuse 8 en liquide hydraulique.

Par ailleurs, dans ce mode de réalisation, une bague 77 est montée à l'extrémité avant de la tige creuse 8. La bague 77 présente un renflement périphérique 78 qui constitue donc une augmentation localisée du diamètre externe de la tige creuse 8. L'embout 79 qui ferme de façon étanche l'extrémité arrière du corps 1 et qui définit comme l'embout 4 des modes de réalisation précédents, une chambre annulaire 6, présente une prolongation 80 dirigée vers l'avant, de diamètre interne croissant de l'arrière vers l'avant. Dans le mode de réalisation illustré, cette croissance se fait selon trois paliers de diamètres différents.

Dans ces conditions, la fin de la course de recul entraîne la pénétration du renflement 78 dans l'alésage de diamètre décroissant de la prolongation annulaire 80, provoquant ainsi une augmentation de l'effet de freinage à la fin de la course de recul. Dans la pratique, la construction est telle que le recul normal pendant lequel le frein agit comme il a été indiqué précédemment en liaison avec la description des modes de réalisation des fig. 1 à 6, se fait sans que le renflement 78 ne pénètre dans la prolongation 80. La course supplémentaire constitue alors une course de sécurité permettant d'éviter un choc en cas de surpression anormale due à un incident de tir. Ce cas pourrait se présenter par exemple dans le cas d'un mortier équipé du frein selon l'invention qui recevrait un deuxième projectile alors qu'un premier projectile est resté dans le fond du tube-canon après un raté.

Dans le mode de réalisation illustré sur les fig. 7 et 8, la soupape 37 a également été modifiée comme on peut le voir mieux sur la vue agrandie de la fig. 8.

La forme générale de la soupape 37 est analogue à celle de la variante illustrée sur la fig. 6 dans la mesure où la jupe 38 formant piston de commande présente une longueur axiale suffisante pour assurer le guidage de la soupape 37 lors de ses mouvements d'ouverture et de fermeture. Ce guidage se fait par l'intermédiaire des portées 81 et 82. Dans ce mode de réalisation, la butée 83 limitant le mouvement de fermeture de la soupape 37 est située à l'extrémité avant du corps 37a de la soupape 37, à l'opposé du nez 36. La butée 83 est constituée par une portée de plus grand diamètre à l'extrémité du corps 37a qui coopère avec un épaulement 84 de la tête interne 70.

La partie extrême avant 85 du corps 37a de la soupape 37, située entre la portée 82 et la butée 83, présente une paroi munie de perforations 86 qui permettent l'égalisation de la pression de gaz lors du mouvement de la soupape 37 entre l'évidement interne 43 de la soupape 37 et la portion terminale 44 de la tête 70.

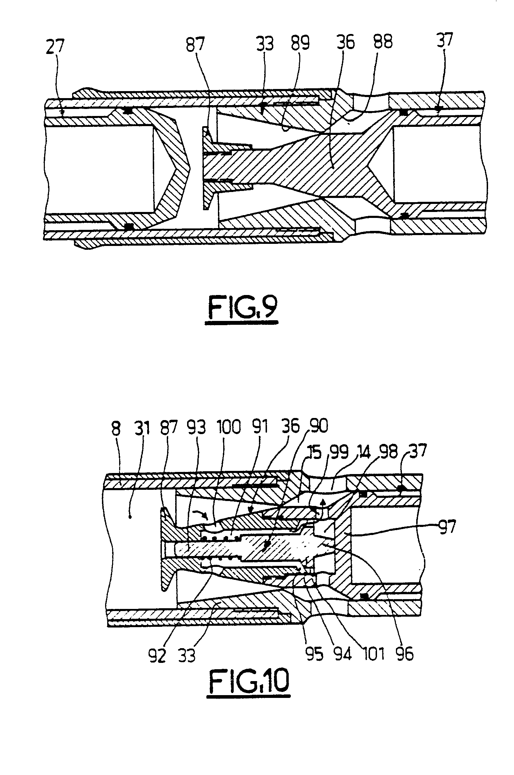

La fig. 9 illustre en coupe la partie du nez 36 de la soupape 37 selon une autre variante de réalisation qui comporte, comme la variante de la fig. 5, un dispositif anti-vibration monté à l'extrémité du nez 36. Dans ce mode de réalisation, le plateau anti-vibration 87 est monté à l'extrémité du nez 36 immédiatement en arrière du siège 33 de la soupape. De plus, le siège 33 présente un profil interne convergent 88 du côté de la soupape 37 et divergent 89 du côté du piston mobile 27. Dans ce mode de réalisation, le siège 33 ne comporte pas de portion cylindrique intermédiaire comme c'était le cas dans les autres modes de réalisation.

La variante de la fig. 10 se différencie essentiellement des modes de réalisation précédents par l'adjonction d'un moyen facilitant une remise en batterie plus rapide que dans les modes de réalisation précédents. Dans cette variante, le nez 36 de la soupape 37 est creux, un piston d'obturation 90 pouvant coulisser à l'intérieur d'une chambre 91 et étant soumis à l'action d'un ressort d'équilibrage de compression 92 monté autour d'une tige 93 solidaire de la partie arrière du piston 90. La partie avant du piston 90 comporte un épaulement 94 formant soupape et pouvant coopérer avec un siège 95 à l'intérieur de la chambre 91.

Une prolongation 96 du piston 90 vient buter sur une paroi frontale 97 de la soupape 37 qui délimite une deuxième chambre 98 à l'intérieur du nez 36 de la soupape 37.

Des perforations 99 font communiquer l'espace annulaire 15 avec la chambre 98. Des perforations 100 font communiquer la première chambre 31 de la tige creuse 8 avec la chambre 91 du nez 36. Des passages axiaux 101 sont en outre prévus à la périphérie de la soupape 94.

Lors du mouvement de remise en batterie, la pression du liquide hydraulique dans la première chambre 31 qui communique avec la chambre 91, est supérieure à la pression régnant dans l'espace annulaire 15 qui communique avec la chambre 98. Il en résulte un mouvement du piston 90 vers l'avant, (vers la droite sur la fig. 10) provoquant le décollement de la soupape 94 de son siège 95 et le dégagement des passages 101 permettant la communication entre les deux chambres 91 et 98 pratiquées à l'intérieur du nez 36, ce qui autorise le passage du liquide hydraulique directement depuis la première chambre 31 de la tige creuse 8 jusqu'à la chambre annulaire 15, le liquide suivant le trajet indiqué par les flèches sur la fig. 10. Ce passage est de plus grand diamètre que celui qui subsiste entre la surface extérieure du nez 36 et le siège 33. Le mouvement de remise en batterie se fait donc plus rapidement que dans les autres modes de réalisation.

Lors du mouvement de recul, la pression dans la chambre annulaire 15 est au contraire supérieure à la pression dans la première chambre 31. La pression régnant dans la chambre annulaire 15 qui communique avec la chambre 98 provoque le déplacement du piston 90 à l'encontre du ressort d'équilibrage 92 fermant ainsi tout passage par l'intérieur du nez 36.

On notera en outre que dans le mode de réalisation illustré sur la fig. 10, le plateau anti-vibration 87 n'est pas, comme dans le mode de réalisation de la fig. 9, solidaire d'un élément supplémentaire vissé à l'extrémité du nez 36 mais fait au contraire partie intégrante dudit nez 36.

**Revendications**

1. Frein de recul hydropneumatique à récupération d'énergie pour pièces d'artillerie et armes à feu, comprenant un corps tubulaire cylindrique (1) lié au bâti fixe de la pièce ou de l'arme et à l'intérieur duquel coulisse de façon étanche une tige creuse (8) liée à la masse reculante de la pièce ou de l'arme, l'espace annulaire (16) compris entre le corps (1) et la tige (8) étant rempli d'un liquide hydraulique, et communiquant avec une première chambre (31) définie à l'intérieur de la tige (8) par un piston mobile (27) de récupération d'énergie qui définit par ailleurs une deuxième chambre (30) remplie d'un gaz, une soupape (37) régulatrice de débit comportant un corps (37a) étant en outre montée mobile à l'intérieur de la tige creuse (8) et sollicitée élastiquement à la fermeture, la soupape coopérant avec un siège (33) solidaire de la tige pour définir un passage de section variable lors du mouvement de recul de la tige à l'intérieur du corps, caractérisé par le fait que le corps (37a) de la soupape est situé en amont de l'écoulement du liquide par rapport au siège de soupape (33), la soupape (37) se déplaçant dans le sens inverse dudit écoulement pour ouvrir le passage précité lors du recul de la tige (8).

2. Frein de recul selon la revendication 1, caractérisé par le fait que le corps (37a) de la soupape (37) est solidaire d'un piston de commande (38a) coulissant dans une portion (9) de l'extrémité avant de la tige creuse (8), le corps (37a) de la soupape et sa partie active (36) coopérant avec son siège (33) présentant un diamètre inférieur au diamètre interne de ladite portion (9) de la tige de façon à définir, entre le siège de soupape (33) et le piston de commande (38a) une chambre annulaire (15) présentant dans sa paroi des passages (14), communiquant avec l'espace annulaire (16) compris entre le corps tubulaire (1) du frein et la tige (8).

3. Frein de recul selon l'une des revendications 1 ou 2, caractérisé par le fait que ladite portion (9) de la tige à l'intérieur de laquelle coulisse le piston de commande (38a) de la soupape (37) peut être mise sous une pression de gaz par l'intermédiaire d'un obturateur à clapet (42).

4. Frein de recul selon l'une des revendications 1 ou 2, caractérisé par le fait que la soupape est soumise à l'action d'un ressort de rappel.

5. Frein de recul selon l'une quelconque des revendications précédentes, caractérisé par le fait qu'au moins une butée (40, 73, 83) interdit la fermeture complète de la soupape afin de permettre le retour du liquide lors de la course de remise en batterie.

6. Frein de recul selon la revendication 5, caractérisé par le fait que la butée (40) est située entre le nez de la soupape (37) et les passages (14) faisant communiquer l'espace annulaire (16) et la première chambre (31).

7. Frein de recul selon la revendication 5, caractérisé par le fait que la butée (73) est située à la partie arrière du corps (37a) de la soupape.

8. Frein de recul selon la revendication 5, caractérisé par le fait que la butée (83) est située à l'extrémité avant du corps (37a) de la soupape, à l'opposé du nez (36).

9. Frein de recul selon la revendication 8, caractérisé par le fait que la partie avant du corps (37a) présente, en arrière de la butée, une paroi perforée (86) permettant l'égalisation de la pression de gaz des deux côtés de la paroi.

10. Frein de recul selon l'une quelconque des revendications 1 à 4, caractérisé par le fait que la soupape (37) est susceptible d'être complètement obturée, au moins un orifice calibré (32) faisant communiquer l'espace annulaire avec l'intérieur de la tige creuse pour le retour du liquide hydraulique lors de la course de remise en batterie.

11. Frein de recul selon l'une quelconque des revendications précédentes, caractérisé par le fait que l'extrémité arrière de la tige comporte un capuchon de fermeture (18) muni d'un obturateur à clapet (23) permettant la mise sous pression du gaz de la deuxième chambre (30).

12. Frein de recul selon l'une quelconque des revendications précédentes caractérisé par le fait que le nez (36) de la soupape coopérant avec son siège présente une forme générale conique s'étendant au-delà du siège (33).

13. Frein de recul selon l'une quelconque des revendications précédentes caractérisé par le fait que la soupape comprend un élément antivibration solidaire de son nez et muni de moyens de guidage coopérant avec la tige.

14. Frein de recul selon la revendication 13, caractérisé par le fait que l'élément anti-vibration comprend un plateau (66), d'un diamètre inférieur à l'alésage de la tige de façon à définir entre le plateau et le nez de la soupape, une chambre anti-vibration (68) communiquant avec la première chambre (31) précitée par un passage annulaire (69) subsistant entre le plateau (66) et la tige (8).

15. Frein de recul selon l'une quelconque des revendications précédentes, caractérisé par le fait qu'il comprend une tige (48) de réglage de course solidaire de l'extrémité avant du corps (1), ladite tige (48) pouvant être déplacée à l'intérieur dudit corps (1) afin de servir de butée à la partie avant de la tige creuse (8) lors du mouvement de remise en batterie.

16. Frein de recul selon l'une quelconque des revendications précédentes, caractérisé par le fait que la partie avant de la tige creuse (8) comporte un dispositif amortisseur de retour en batterie comprenant un corps tubulaire cylindrique (56) rempli de liquide hydraulique, solidaire de la tige creuse (8) et à l'intérieur duquel coulisse un élément creux (57) renfermant un piston mobile (58) séparant l'élément creux entre une chambre (60) remplie d'un gaz et une chambre (59) remplie de liquide hydraulique communiquant par des orifices (62) avec ledit corps tubulaire.

17. Frein de recul selon la revendication 16, caractérisé par le fait que l'élément creux (57) comporte un capuchon de fermeture muni d'un obturateur à clapet (64).

18. Frein de recul selon l'une quelconque des revendications précédentes, caractérisé par le fait que la face du piston mobile dirigée vers la soupape (37) est convexe ou de forme conique.

19. Frein de recul selon l'une quelconque des revendications précédentes, caractérisé par le fait que la tige creuse comporte, au voisinage de son extrémité avant, un renflement périphérique externe (78) coopérant, en fin de course de recul, avec un alésage de diamètre décroissant du corps (1), de façon à augmenter l'effet de freinage en fin de course de recul.

20. Frein de recul selon l'une quelconque des revendications précédentes, caractérisé par le fait que le siège de soupape présente un profil interne convergent-divergent (88, 89) analogue à une tuyère.

21. Frein de recul selon la revendication 20, caractérisé par le fait que la soupape comprend un plateau anti-vibration (87) monté à l'extrémité du nez immédiatement en arrière du profil divergent (89) du siège de soupape.

22. Frein de recul selon la revendication précédente, caractérisé par le fait que le nez de la soupape comporte un passage interne (91, 98) faisant communiquer directement la première chambre (31) avec la chambre annulaire (15) un élément d'obturation coulissant (90) étant monté à l'intérieur du nez (36) de la soupape afin d'ouvrir ledit passage interne lors du mouvement de remise en batterie.

**Claims**

1. Hydropneumatic recoil brake with energy recovery for artillery pieces and firearms, comprising a cylindrical tubular body (1) which is connected to the fixed frame of the artillery piece or of the firearm and inside which slides in a sealed manner a hollow rod (8) connected to the recoiling mass of the artillery piece or of the firearm, the annular space (16) located between the body (1) and the rod (8) being filled with a hydraulic fluid and communicating with a first chamber (31) defined within the rod (8) by a moveable energy recovery piston (27) which also defines a second chamber (30) filled with a gas, a flow-regulating valve (37), which has a body (37a), furthermore being mounted so as to be moveable inside the hollow rod (8) and biased elastically into the closing position, the valve interacting with a seat (33) integral with the rod to define a passage of a cross-section which is variable during the recoil movement of the rod within the body, characterized in that the body (37a) of the valve is located upstream of the flow of liquid relative to the valve seat (33), the valve (37) moving in the opposite direction to the said flow in order to open the abovementioned passage during the recoil of the rod (8).

2. Recoil brake according to Claim 1, characterized in that the body (37a) of the valve (37) is integral with a control piston (38a) sliding in a portion (9) of the front end of the hollow rod (8), and the body (37a) of the valve and its active part (36) interacting with its seat (33) have a smaller diameter than the inside diameter of the said portion (9) of the rod, so as to define, between the valve seat (33) and the control piston (38a), an annular chamber (15) which in its wall has passages (14) communicating with the annular space (16) located between the tubular body (1) of the brake and the rod (8).

3. Recoil brake according to one of Claims 1 or 2, characterized in that the said portion (9) of the rod, within which slides the control piston (38a) of the valve (57), can be put under gas pressure by means of a shut-off flap (42).

4. Recoil brake according to one of Claims 1 or 2, characterized in that the valve is subjected to the action of a restoring spring.

5. Recoil brake according to any one of the preceding claims, characterized in that at least one stop (40, 75, 83) prevents the valve from closing completely, in order to allow the liquid to return during the return stroke.

6. Recoil brake according to Claim 5, characterized in that the stop (40) is located between the nose of the valve (37) and the passages (14) putting the annular space (16) in communication with the first chamber (31).

7. Recoil brake according to Claim 5, characterized in that the stop (73) is located in the rear part of the body (37a) of the valve.

8. Recoil brake according to Claim 5, characterized in that the stop (83) is located at the front end of the body (37a) of the valve, in the opposite direction to the nose (36).

9. Recoil brake according to Claim 8, characterized in that the front part of the body (37a) has, at the rear of the stop, a perforated wall (86) which allows the gas pressure on the two sides of the wall to be equalized.

10. Recoil brake according to any one of Claims 1 to 4, characterized in that the valve (37) is capable of being shut off completely, at least one calibrated orifice (32) putting the annular space in communication with the interior of the hollow rod for the return of the hydraulic fluid during the return stroke.

11. Recoil brake according to any one of the preceding claims, characterized in that the rear end of the rod has a closing cap (18) equipped with a shut-off flap (23) allowing the gas in the second chamber (30) to be put under pressure.

12. Recoil brake according to any one of the preceding claims, characterized in that the nose (36) of the valve interacting with its seat has a general conical shape extending beyond the seat (33).

13. Recoil brake according to any one of the preceding claims, characterized in that the valve possesses an anti-vibration element integral with its nose and equipped with guide means interacting with the rod.

14. Recoil brake according to Claim 13, characterized in that the anti-vibration element comprises a plate (66) of a diameter smaller than that of the bore of the rod, so as to define, between the plate and the nose of the valve, an anti-vibration chamber (68) which communicates with the above-mentioned first chamber (31) via an annular passage (69) existing between the plate (66) and the rod (8).

15. Recoil brake according to any one of the preceding claims, characterized in that it possesses a stroke-adjusting rod (48) integral with the front end of the body (1) and the said rod (48) can be shifted within the said body (1) in order to serve as a stop for the front part of the hollow rod (8) during the return movement.

16. Recoil brake according to any one of the preceding claims, characterized in that the front part of the hollow rod (8) has a return damping device comprising a cylindrical tubular body (56) which is filled with hydraulic liquid and is integral with the hollow rod (8) and within which slides a hollow element (57) containing a moveable piston (58) separating the hollow element between a chamber (60) filled with a gas and a chamber (59) filled with hydraulic liquid and communicating with the said tubular body via orifices (62).

17. Recoil brake according to Claim 16, characterized in that the hollow element (57) has a closing cap equipped with a shut-off flap (64).

18. Recoil brake according to any one of the preceding claims, characterized in that the face of the moveable piston directed towards the valve (37) is convex or of conical shape.

19. Recoil brake according to any one the preceding claims, characterized in that the hollow rod has, near its front end, an outer peripheral boss (78) which, at the end of the recoil stroke, interacts with a bore of decreasing diameter in the body (1), in order to increase the braking effect at the end of the recoil stroke.

20. Recoil brake according to any one of the preceding claims, characterized in that the valve seat has a convergent/divergent inner profile (88, 89) similar to that of a nozzle.

21. Recoil brake according to Claim 20, characterized in that the valve possesses an anti-vibration plate (87) mounted at the end of the nose immediately to the rear of the divergent profile (89) of the valve seat.

22. Recoil brake according to the preceding claim, characterized in that the nose of the valve has an inner passage (91, 98) putting the first chamber (31) directly in communication with the annular chamber (15), a sliding shut-off element (90) being mounted inside the nose (36) of the valve in order to open the said inner passage during the return movement.

**Patentansprüche**

1. Hydropneumatische Rohrbremse mit Rohrvorholer für Artilleriegeschütze und Feuerwaffen, bestehend aus einem zylinderförmigen Rohrstück (1), das mit dem festen Unterteil des Geschützes oder der Waffe verbunden ist und in dessen Inneren ein mit der Rücklaufmasse des Geschützes oder der Waffe verbundener Hohlschaft (8) dicht anliegend hin und her gleitet, wobei der zwischen dem Rohrstück (1) und dem Schaft (8) bestehende ringförmige Zwischenraum (16) mit einer Hydraulikflüssigkeit gefüllt ist und in eine erste Kammer (31) einmündet, die innerhalb des Schaftes (8) durch einen beweglichen Energierückgewinnungskolben (27) gebildet wird, der seinerseits eine mit Gas gefüllte zweite Kammer (30) bildet, mit einem überdies innerhalb des Hohlschaftes (8) beweglich angebrachten in Verschließrichtung elastisch belasteten und einen Körper (37a) aufweisenden Lastregelventil (37), wobei dieses Ventil mit einem bündig passenden Sitz (33) des Schaftes zusammenwirkt, um bei der Rücklaufbewegung des Schaftes in das Innere des Rohrstücks eine Drosselung mit veränderlichem Querschnitt zu bilden, dadurch gekennzeichnet, daß der Körper (37a) des Ventils sich bezogen auf den Ventilsitz (33) stromaufwärts der Flüssigkeitsströmung befindet, wobei das Ventil (37) sich in umgekehrter Richtung zu der genannten Strömung bewegt, um beim Rücklauf des Schaftes (8) den erwähnten Durchgang zu öffnen.

2. Rohrbremse nach Anspruch 1, dadurch gekennzeichnet, daß der Körper (37a) des Ventils (37) bündig auf einem Steuerkolben (38a) aufsitzt, der innerhalb eines Teilstücks (9) des Endes vor dem Hohlschaft (8) hin und her gleitet, wobei der Ventilkörper (37a) und sein mit dem Sitz (33) zusammenwirkender Teil (36) einen geringeren Durchmesser als den Innendurchmesser des genannten Teilstücks (9) des Schaftes aufweisen, um zwischen dem Ventilsitz (33) und dem Steuerkolben (38a) eine ringförmige Kammer (15) zu bilden, die in ihrer Seitenwand Durchgänge (14) aufweist, welche in den ringförmigen Zwischenraum (16) übergehen, der zwischen dem Rohrstück (1) der Bremse und dem Schaft (8) besteht.

3. Rohrbremse nach einem der Ansprüche 1 oder 2, dadurch gekennzeichnet, daß das genannte Teilstück (9) des Schaftes, in dessen Innenraum der Steuerkolben (38a) des Ventils (37) hin und her gleitet, mittels eines Klappenverschlusses (42) unter Gasdruck gesetzt werden kann.

4. Rohrbremse nach einem der Ansprüche 1 oder 2, dadurch gekennzeichnet, daß auf das Ventil eine Spannfeder einwirkt.

5. Rohrbremse nach einem der vorstehenden Ansprüche, dadurch gekennzeichnet, daß durch zumindest einen Anschlag (40, 73, 83) ein vollständiges Schließen des Ventils verhindert wird, damit beim Verlauf die Flüssigkeit wieder zurückströmen kann.

6. Rohrbremse nach Anspruch 5, dadurch gekennzeichnet, daß der Anschlag (40) sich zwischen der Spitze des Ventils (37) und den Durchgängen (14) befindet, über welche der ringförmige Zwischenraum (16) und die erste Kammer (31) miteinander verbunden werden.

7. Rohrbremse nach Anspruch 5, dadurch gekennzeichnet, daß der Anschlag (73) sich im hinteren Teil des Ventilkörpers (37a) befindet.

8. Rohrbremse nach Anspruch 5, dadurch gekennzeichnet, daß der Anschlag (83) sich am vorderen Ende des Ventilkörpers (37a) gegenüber der Spitze (36) befindet.

9. Rohrbremse nach Anspruch 8, dadurch gekennzeichnet, daß das vordere Teil des Körpers (37a) hinter dem Anschlag eine Wand mit Durchbohrunge (86) aufweist, die einen Ausgleich des Gasdrucks auf beiden Seiten der Wand ermöglichen.

10. Rohrbremse nach einem der Ansprüche 1 bis 4, dadurch gekennzeichnet, daß das Ventil (37) vollständig geschlossen werden kann, wobei durch zumindest eine Drosselung (32) eine Verbindung zwischen dem ringförmigen Zwischenraum und dem Innenraum des Hohlschaftes hergestellt wird, damit die Hydraulikflüssigkeit beim Vorlauf wieder zurückstromen kann.

11. Rohrbremse nach einem der vorstehenden Ansprüche, dadurch gekennzeichnet, daß das hintere Ende des Schaftes eine mit einem Klappenverschluß (23) versehene Dichtungskappe (18) umfaßt, mit dem die zweite Kammer (30) unter Gasdruck gesetzt werden kann.

12. Rohrbremse nach einem der vorstehenden Ansprüche, dadurch gekennzeichnet, daß die Spitze (36) des mit dem Sitz zusammenwirkenden Ventils eine im wesentlichen konische Form aufweist und über den Sitz (33) hinausragt.

13. Rohrbremse nach einem der vorstehenden Ansprüche, dadurch gekennzeichnet, daß das Ventil ein auf seiner Spitze bündig aufsitzendes Schwingungsdämpfungselement enthält, das mit Führungsvorrichtungen versehen ist, die mit dem Schaft zusammenwirken.

14. Rohrbremse nach Anspruch 13, dadurch gekennzeichnet, daß das Schwingungsdämpfungselement eine Scheibe (66) enthält, deren Durchmesser geringer als die Bohrungsweite des Schaftes ist, sodaß zwischen der Scheibe und der Spitze des Ventils eine Schwingungsdämpfungskammer (68) gebildet wird, die über einen zwischen der Scheibe (66) und dem Schaft (8) verbleibenden ringförmigen Durchgang (69) in die vorerwähnte erste Kammer (31) übergeht.

15. Rohrbremse nach einem der vorstehenden Ansprüche, dadurch gekennzeichnet, daß es einen auf dem vorderen Ende des Rohrstücks (1) bündig aufsitzenden Hubregelschaft (48) enthält, wobei dieser Schaft (48) in den Innenraum des genannten Rohrstücks (1) hineingeschoben werden kann, um dort bei der Vorlaufbewegung als Anschlag für das vordere Teil des Hohlschaftes (8) zu dienen.

16. Rohrbremse nach einem der vorstehenden Ansprüche, dadurch gekennzeichnet, daß das vordere Teil des Hohlschaftes (8) eine Rücklauf-Dämpfungsvorrichtung umfaßt, zu der ein zylinderförmiges, mit Hydraulikflüssigkeit gefülltes Rohrstück (56) gehört, das bündig auf dem Hohlschaft (8) aufsitzt und in dessen Innenraum ein Hohlstück (57) hin und her gleitet, das einen beweglichen Kolben (58) enthält, von dem das Hohlstück zwischen einer mit Gas gefüllten Kammer (60) und einer mit Hydraulikflüssigkeit gefüllten Kammer (59) getrennt wird, welche durch Öffnungen (62) in das genannte Rohrstück übergeht.

17. Rohrbremse nach Anspruch 16, dadurch gekennzeichnet, daß das Hohlstück (57) eine mit einem Klappenverschluß (64) versehene Dichtungskappe umfaßt.

18. Rohrbremse nach einem der vorstehenden Ansprüche, dadurch gekennzeichnet, daß die zum Ventil (37) gerichtete Stirnseite des beweglichen Kolbens konvex oder von konischer Form ist.

19. Rohrbremse nach einem der vorstehenden Ansprüche, dadurch gekennzeichnet, daß der Hohlschaft in der Nähe seines vorderen Endes einen umlaufenden äußeren Wulst (78) enthält, der am Ende des Rücklaufs mit einer Bohrung von abnehmenden Durchmesser im Rohrstück (1) zusammenwirkt, sodaß am Ende des Rücklaufs die Bremswirkung verstärkt wird.

20. Rohrbremse nach einem der vorstehenden Ansprüche, dadurch gekennzeichnet, daß der Ventilsitz von innen ein konvergent-divergentes Profil (88, 89) aufweist, das einer Düse ähnelt.

21. Rohrbremse nach Anspruch 20, dadurch gekennzeichnet, daß das Ventil eine Schwingungsdämpfungsscheibe (87) enthält, die am Ende der Spitze unmittelbar hinter dem divergenten Profil (89) des Ventilsitzes angebracht ist.

22. Rohrbremse nach dem vorstehenden Anspruch, dadurch gekennzeichnet, daß die Ventilspitze einen inneren Durchgang (91, 98) enthält, durch den die erste Kammer (31) unmittelbar mit der ringförmigen Kammer (15) verbunden wird, wobei im Inneren der Ventilspitze (36) ein gleitendes Verchlußteil (90) angebracht ist, um bei der Vorlaufbewegung den genannten inneren Durchgang zu öffnen.

FIG.1

0 107 117

FIG.2

## FIG.3

54  53  55
48.
51
3
47
52.

## FIG.4

46  56  57
42
41  45  62  64
61.  58  60.
59.  63
65
9  13
11  1

FIG.5

0 107 117

FIG.6

FIG.7

FIG.8

0 107 117

FIG.9

FIG.10